# EUROPÄISCHE PATENTSCHRIFT

(11) **EP 2 876 425 B1**
(45) Veröffentlichungstag und Bekanntmachung des Hinweises auf die Patenterteilung: **14.12.2016**
(21) Anmeldenummer: 14188419.7
(22) Anmeldetag: 10.10.2014
(51) Int. Cl.: B61D 23/02, G01L 5/06, G01M 99/00

(54) **Vorrichtung und Verfahren zur Klemmkraftmessung an einer ausfahrbaren Trittstufe eines Fahrzeugs, insbesondere Schienenfahrzeugs**
Device and method for clamping force measurement on an extensible step of a vehicle, in particular a rail vehicle
Dispositif et procédé de mesure de la force de serrage sur une marche amovible d'un véhicule, notamment d'un véhicule sur rail

(30) Priorität: 15.10.2013 DE 102013017023
(43) Veröffentlichungstag der Anmeldung: 27.05.2015
(73) Patentinhaber: Bombardier Transportation GmbH, 10785 Berlin (DE)
(72) Erfinder: Krämer, Roman, 16727 Oberkrämer (DE)
(74) Vertreter: Cohausz & Florack

(56) Entgegenhaltungen:
- EP-A1- 2 033 870
- WO-A1-2004/085222
- DE-A1- 3 708 498

## Beschreibung

Die vorliegende Erfindung betrifft eine Vorrichtung zur Klemmkraftmessung an einer ausfahrbaren Trittstufe eines Fahrzeugs, insbesondere Schienenfahrzeugs, mit einer Messeinrichtung. Ferner betrifft die Erfindung ein entsprechendes Verfahren zur Klemmkraftmessung an einer ausfahrbaren Trittstufe eines Fahrzeugs, insbesondere Schienenfahrzeugs, unter Verwendung einer solchen Vorrichtung.

Schiebetritte, bei denen in der Regel eine Trittstufe aus einer Kassette (einem Gehäuse) ausgefahren werden kann, werden bei Schienenfahrzeugen eingesetzt, um einerseits die Bedienung niedriger Bahnsteighöhen zu gewährleisten und andererseits den Spalt zwischen dem Wagenkasten des Schienenfahrzeugs und dem Bahnsteig zu minimieren. Ein solcher Schiebetritt ist beispielsweise aus der EP 2 602 167 A1 bekannt.

Schiebetritte der zuvor beschriebenen Art werden im Bedarfsfall automatisch oder auf Anforderung, wenn das Schienenfahrzeug beispielsweise an einem Bahnsteig zum Stillstand gekommen ist, in horizontaler Richtung, das heißt in Richtung des Bahnsteigs, ausgefahren, so dass Personen über den Schiebetritt von der darüber befindlichen Türöffnung im Wagenkasten auf den Bahnsteig oder umgekehrt vom Bahnsteig in den Wagenkasten gelangen können. Aus Sicherheitsgründen kann bei einem solchen Schiebetritt der Antrieb so gesteuert sein, dass bei Überschreiten einer vorgegebenen Klemmkraft der Schiebetritt angehalten und gegebenenfalls danach in entgegen gesetzter Richtung bewegt wird. Mit anderen Worten verfügt ein solcher Schiebetritt über eine Sicherheitsabschaltung, die automatisch bei Überschreiten des Soll-Wertes für die Klemmkraft betätigt bzw. ausgelöst wird. Ein Beispiel für einen solchen Schiebetritt beschreibt die WO 2004/085222 A1.

Um bei der Herstellung oder Wartung von Schienenfahrzeugen die Funktion des Schiebetritts und insbesondere die Sicherheitsabschaltung einzustellen und/oder zu überprüfen, wird der Schiebetritt gegen ein zufällig in der Nähe befindliches Hindernis wie eine Treppe oder einen Aufstieg gefahren, wobei eine Messeinrichtung zwischen dem Hindernis, das heißt der Treppe bzw. dem Aufstieg, und dem ausfahrenden Schiebetritt angeordnet wird. Problematisch ist dabei aber, dass die verwendeten Hindernisse oft keinen ausreichend sicheren Stand haben bzw. nicht stabil genug sind. Die Folge ist, dass die Messergebnisse verfälscht werden.

Des Weiteren werden ausfahrbare Klapptritte eingesetzt, bei denen die Trittstufe automatisch ausgeklappt (ausgeschwenkt) wird. Die Einstellung und Prüfung der Funktion von ausfahrbaren Klapptritten unterliegt ähnlichen Anforderungen.

Es ist daher eine Aufgabe der vorliegenden Erfindung, eine Vorrichtung nach Anspruch 1 und ein Verfahren nach Anspruch 11 anzugeben, mit dem eine präzisere Klemmkraftmessung an einer ausfahrbaren Trittstufe eines Fahrzeugs möglich ist.

Die zuvor hergeleitete und aufgezeigte Aufgabe wird gemäß einer ersten Lehre der vorliegenden Erfindung bei einer Vorrichtung zur Klemmkraftmessung an einer ausfahrbaren Trittstufe, beispielsweise einem ausfahrbaren Schiebetritt, eines Fahrzeugs, insbesondere Schienenfahrzeugs, mit einer Messeinrichtung, dadurch gelöst, dass die Vorrichtung ferner einen Ständer, der einen sich von einem unteren Ende zu einem oberen Ende im Wesentlichen in einer vertikalen Richtung, das heißt im Wesentlichen entgegen der Schwerkraftrichtung, erstreckenden Balken aufweist, einen Ausleger, der sich von einem ersten Ende, mit dem er an dem Balken befestigt ist, zu einem zweiten Ende erstreckt, und einen Haken aufweist, der an dem Ausleger beabstandet zu dem Balken befestigt ist, wobei der Ausleger in einer Betriebsposition winkelig zum Balken verläuft, wobei sich in der Betriebsposition ein Abschnitt des Balkens in vertikaler Richtung oberhalb des ersten Endes des Auslegers erstreckt, wobei die Messeinrichtung in vertikaler Richtung oberhalb des ersten Endes des Auslegers positioniert ist, und wobei, wenn der Haken mit einer der Schienen, auf denen das Fahrzeug mit der ausfahrbaren Trittstufe angeordnet ist, zusammenwirkt, der Ausleger den Balken in horizontaler Richtung und quer zur Verlaufsrichtung der Schienen fixiert.

"Winkelig" bedeutet dabei, dass der Ausleger in der Betriebsposition nicht parallel zum Balken verläuft, sondern zwischen der Haupterstreckungsrichtung des Auslegers und der Haupterstreckungsrichtung des Balkens ein Winkel größer 0° vorgesehen ist. Insbesondere liegt dieser Winkel in einem Bereich von 60 bis 120°, bevorzugt in einem Bereich von 70 bis 110° und besonders bevorzugt in einem Bereich von 80 bis 100°. Beispielsweise beträgt der Winkel zwischen Ausleger und Balken in der Betriebsposition 90°, so dass sich der Ausleger in horizontaler Richtung erstreckt. "Im Wesentlichen in einer vertikalen Richtung" bedeutet, dass die Hauptrichtungskomponente der Verlaufsrichtung des Balkens die vertikale Richtung ist - z.B. bei einem unebenen Untergrund wird dann der auf dem Untergrund aufstehende Balken möglicherweise nicht exakt vertikal ausgerichtet sein, aber im Wesentlichen schon.

Wie zuvor definiert, erstreckt sich in der Betriebsposition ein Abschnitt des Balkens in vertikaler Richtung oberhalb des ersten Endes des Auslegers. Mit anderen Worten ist der Ausleger in der Betriebsposition an einer Stelle mit dem Balken verbunden, die von dem oberen Ende des Balkens in vertikaler Richtung beabstandet ist; es steht also in dem Fall, dass sich der Ausleger in der Betriebsposition in einer horizontalen Ebene erstreckt, ein Abschnitt des Balkens vertikal nach oben (entgegen der Schwerkraftrichtung) gegenüber der horizontalen Ebene hervor.

Die erfindungsgemäße Vorrichtung erlaubt mit einfachen Mitteln eine präzise und reproduzierbare Klemmkraftmessung an einer ausfahrbaren Trittstufe, insbesondere einem Schiebetritt. Dazu bildet der Balken des Ständers ein Hindernis, gegen das die ausfahrende Trittstufe die Messeinrichtung drückt. Das Hindernis besteht dabei in dem oberen Abschnitt des Balkens, wobei dieser Abschnitt bei der Klemmkraftmessung dadurch sicher in Position gehalten wird, dass der Ausleger den Balken in horizontaler Richtung über den mit einer Schiene zusammenwirkenden Haken fixiert. Der Haken kann, wie später noch erläutert wird, eine der Schienen hintergreifen, auf denen das Fahrzeug mit der ausfahrbaren Trittstufe angeordnet ist. Da das Fahrzeug quer zur Verlaufsrichtung der Schienen zwangsläufig fixiert ist und erfindungsgemäß auch der Ständer bzw. Balken über den Ausleger an einer der Schienen in horizontaler Richtung fixiert ist, sind Balken und Fahrzeug in einem festen Abstand zueinander fixiert. Drückt nun die ausfahrende Trittstufe (z.B. über die Messeinrichtung) gegen den oberen Abschnitt des Balkens, wird die Druckkraft über den Ausleger und Haken auf die Schiene, an der der Haken anliegt, übertragen.

Gemäß einer Ausgestaltung der vorliegenden Erfindung weist der Haken in der Betriebsposition in vertikaler Richtung nach unten, das heißt zum Boden. Auf diese Weise kann der Ausleger auf die Schiene, an die der Haken angelegt werden soll, aufgelegt werden, wobei der Haken dann in Schwerkraftrichtung ragt.

Gemäß einer weiteren Ausgestaltung der erfindungsgemäßen Vorrichtung ist der Haken gebogen, insbesondere in Richtung des Balkens. Ein solchermaßen gebogener Haken kann besonders sicher an der Schiene, insbesondere am Schienenkopf, eingehakt werden. Durch die Biegung kann sich der Haken um den nach außen gewölbten Schienenkopf legen, wodurch bei einer vom Ausleger ausgeübten Zugbelastung verhindert wird, dass der Haken in vertikaler Richtung nach oben von der Schiene abrutscht.

Gemäß noch einer Ausgestaltung der erfindungsgemäßen Vorrichtung ist der Haken am Ausleger zwischen einer ersten Hakenposition und einer zweiten Hakenposition verstellbar, insbesondere verschiebbar, wobei der Haken in der ersten Hakenposition, in der zweiten Hakenposition und/oder in mindestens einer Zwischenposition (zwischen der ersten Hakenposition und der zweiten Hakenposition) am Ausleger insbesondere fixierbar ist. Der Haken kann an einem Element, beispielsweise einem Rahmen oder einer Manschette, der/die um den Ausleger herum angeordnet ist, befestigt oder angeformt sein, welches Element verschiebbar am Ausleger gelagert und/oder über eine Schraube am Ausleger befestigt sein kann. Die Schraube kann insbesondere von Hand gelockert oder gelöst und auch festgezogen werden, um dadurch den Haken in der Hauptverlaufsrichtung des Auslegers zu fixieren.

Gemäß noch einer Ausgestaltung der erfindungsgemäßen Vorrichtung ist der Ausleger am Balken zwischen einer ersten Auslegerposition und einer zweiten Auslegerposition verstellbar, insbesondere verschiebbar, wobei der Ausleger in der ersten Auslegerposition, in der zweiten Auslegerposition und/oder in mindestens einer Zwischenposition (zwischen der ersten Auslegerposition und der zweiten Auslegerposition) am Balken insbesondere fixierbar ist. Der Ausleger kann an einem Element, insbesondere einem Rahmen oder einer Manschette, der/die um den Balken herum angeordnet ist, befestigt oder angeformt sein, welches Element am Balken verschiebbar gelagert und/oder über eine Schraube am Balken befestigt sein kann. Auch diese Schraube kann wie zuvor beschrieben gehandhabt werden.

Gemäß wiederum einer weiteren Ausgestaltung der erfindungsgemäßen Vorrichtung ist der Ausleger zwischen der Betriebsposition und einer Ruheposition schwenkbar. Mit einer Ruheposition ist eine Position des Auslegers gemeint, in welcher der Ausleger nicht mit der Schiene verbunden ist, sondern sich in einer anderen, insbesondere weniger ausladenden Position befindet. Der Ausleger ist in der Betriebsposition und/oder in der Ruheposition insbesondere fixierbar. Dabei ist es denkbar, dass eine Gelenkverbindung zwischen Balken und Ausleger vorgesehen ist, die insbesondere Teil des zuvor beschriebenen Elements ist, welches verschiebbar am Balken gelagert ist. Vorzugsweise wird der Ausleger zwischen der Betriebsposition und der Ruheposition in einer vertikalen Ebene verschwenkt. Es ist denkbar, dass sich der Ausleger in der Ruheposition entlang des Balkens, insbesondere parallel zum Balken, erstreckt. "Entlang des Balkens" bedeutet, dass der Ausleger in der Ruheposition nicht exakt parallel zum Balken verlaufen muss, aber die Hauptrichtungskomponente der Erstreckungsrichtung des Auslegers in der Ruheposition parallel zum Balken verläuft. Mit anderen Worten lässt sich der Ausleger in Richtung des Balkens und bevorzugt an den Balken klappen.

Gemäß noch einer Ausgestaltung der erfindungsgemäßen Vorrichtung weist der Ständer einen insbesondere plattenförmigen Fuß auf, der mit dem unteren Ende des Balkens, insbesondere unlösbar, verbunden ist. Der Fuß kann beispielsweise mit dem Balken verschweißt sein, wobei zu Verstärkungszwecken Winkeleisen zwischen Balkenseite und Fußoberseite angeordnet bzw. angeschweißt sein können. Ein solcher Fuß gibt der Vorrichtung während der Klemmkraftmessung zusätzliche Stabilität. Im Bedarfsfall kann ein solcher Fuß mit zusätzlichen Gewichten versehen werden, was die Stabilität der gesamten Vorrichtung noch weiter erhöht. Grundsätzlich ist es auch denkbar, die Vorrichtung über den Fuß am Boden zu verankern, beispielsweise mit dem Boden zu verschrauben.

Gemäß wieder einer weiteren Ausgestaltung der erfindungsgemäßen Vorrichtung ist der Balken und/oder der Ausleger ein Hohlprofil. Eine solche Profilform führt zu einer besonderen Steifigkeit der jeweiligen Bauteile, das heißt des Balkens bzw. Auslegers, und kann hohen Biegemomenten standhalten. Insbesondere weist der Balken und/oder der Ausleger einen rechteckigen Außenquerschnitt auf. Dies hat den zusätzlichen Vorteil, dass sich der Ausleger nicht unabsichtlich um die Längsachse des Balkens und sich der Haken nicht unabsichtlich um die Längsachse des Auslegers drehen kann.

Gemäß noch einer Ausgestaltung der erfindungsgemäßen Vorrichtung besteht der Balken, der Ausleger, der Haken und/oder der Fuß aus Metall. Metall, beispielsweise Stahl, hat sich für die vorgenannten Zwecke als besonders stabil erwiesen.

Die Aufgabe wird ferner gemäß einer zweiten Lehre der vorliegenden Erfindung gelöst durch ein Verfahren zur Klemmkraftmessung an einer ausfahrbaren Trittstufe eines Fahrzeugs, insbesondere Schienenfahrzeugs, unter Verwendung einer Vorrichtung der zuvor beschriebenen Art, bei dem die folgenden Schritte, insbesondere in beliebiger Reihenfolge, durchgeführt werden:
- Bereitstellen des Fahrzeugs auf Schienen,
- Aufstellen der Vorrichtung in einer Position, in der der Balken innerhalb der horizontalen Verlängerung (Projektion), insbesondere des Verschiebewegs, der ausfahrbaren Trittstufe, beispielsweise des ausfahrbaren Schiebetritts, liegt,
- Positionieren des Auslegers in der Betriebsposition,
- Anlegen (Einhaken) des Hakens an der vom Ständer abgewandten Seite einer der Schienen, vorzugsweise der nächstliegenden Schiene,
- Positionieren einer Messeinrichtung, insbesondere Kraftmessdose, in vertikaler Richtung oberhalb des ersten Endes des Auslegers, vorzugsweise zwischen dem Abschnitt des Balkens, der sich in vertikaler Richtung oberhalb des Auslegers erstreckt, und der Trittstufe, insbesondere der Außenkante der Trittstufe,
- Ausfahren der Trittstufe, so dass die Messeinrichtung einer Klemmkraft ausgesetzt wird, wobei die Messeinrichtung insbesondere zwischen der Trittstufe und dem Balken der Vorrichtung eingeklemmt wird, und
- Erfassen der Klemmkraft zwischen der ausgefahrenen Trittstufe und dem Balken mittels der Messeinrichtung.

Mit der horizontalen Verlängerung der Trittstufe ist nicht nur die Trittstufe selbst, sondern auch eine gedachte Verlängerung in Ausfahrrichtung der Trittstufe, also in horizontaler Richtung, gemeint. Die Vorrichtung wird also so angeordnet, dass der Balken an einer Stelle positioniert ist, in deren Richtung die Trittstufe ausfährt und die die Trittstufe insbesondere beim Ausfahren erreicht.

Die vorangehend aufgezählten Verfahrensschritte müssen nicht zwingend in der angegebenen Reihenfolge durchgeführt werden. Im Gegenteil, einige Schritte können auch vor anderen Schritten oder gleichzeitig mit anderen Schritten ausgeführt werden. Beispielsweise kann der Schritt des Positionierens des Auslegers in der Betriebsposition auch vor oder während dem Schritt des Aufstellens der Vorrichtung in einer Position, in der der Balken innerhalb der horizontalen Verlängerung der Trittstufe liegt, erfolgen. Dasselbe gilt beispielsweise auch für den Schritt des Anlegens des Hakens an der jeweiligen Schiene.

Das Positionieren der Messeinrichtung kann dadurch erfolgen, dass der Anwender der Vorrichtung die Messeinrichtung von Hand in den Bereich zwischen Balken und ausfahrender Trittstufe hält. Es ist auch denkbar, dass die Messeinrichtung vor dem Ausfahren der Trittstufe mit dem Balken oder der Trittstufe verbunden und insbesondere daran fixiert wird.

Gemäß einer Ausgestaltung des erfindungsgemäßen Verfahrens kann vorgesehen sein, dass bei dem Schritt des Positionierens des Auslegers in der Betriebsposition der Ausleger am Balken in einem Bereich zwischen der ersten Auslegerposition und der zweiten Auslegerposition verstellt, insbesondere verschoben, und anschließend am Balken insbesondere fixiert wird.

Gemäß noch einer Ausgestaltung des erfindungsgemäßen Verfahrens kann vorgesehen sein, dass bei dem Schritt des Positionierens des Auslegers in der Betriebsposition der Ausleger von der Ruheposition in die Betriebsposition geschwenkt und anschließend insbesondere fixiert wird.

Schließlich kann gemäß noch einer Ausgestaltung des erfindungsgemäßen Verfahrens vorgesehen sein, dass bei dem Schritt des Anlegens des Hakens der Haken am Ausleger in einem Bereich zwischen der ersten Hakenposition und der zweiten Hakenposition verstellt, insbesondere verschoben, und anschließend am Ausleger insbesondere fixiert wird.

Es gibt nun eine Vielzahl von Möglichkeiten, die erfindungsgemäße Vorrichtung und das erfindungsgemäße Verfahren auszugestalten und weiterzubilden. Hierzu wird einerseits verwiesen auf die dem Patentanspruch 1 nachgeordneten Patentansprüche, andererseits auf die Beschreibung eines Ausführungsbeispiels in Verbindung mit der Zeichnung. In der Zeichnung zeigt:
- Fig. 1: eine erfindungsgemäße Vorrichtung zur Klemmkraftmessung im Betrieb,
- Fig. 2: die Vorrichtung aus Fig. 1 im zusammengeklappten Zustand und
- Fig. 3: eine Schnittansicht der Vorrichtung aus Fig. 2 entlang der Schnittlinie AA.

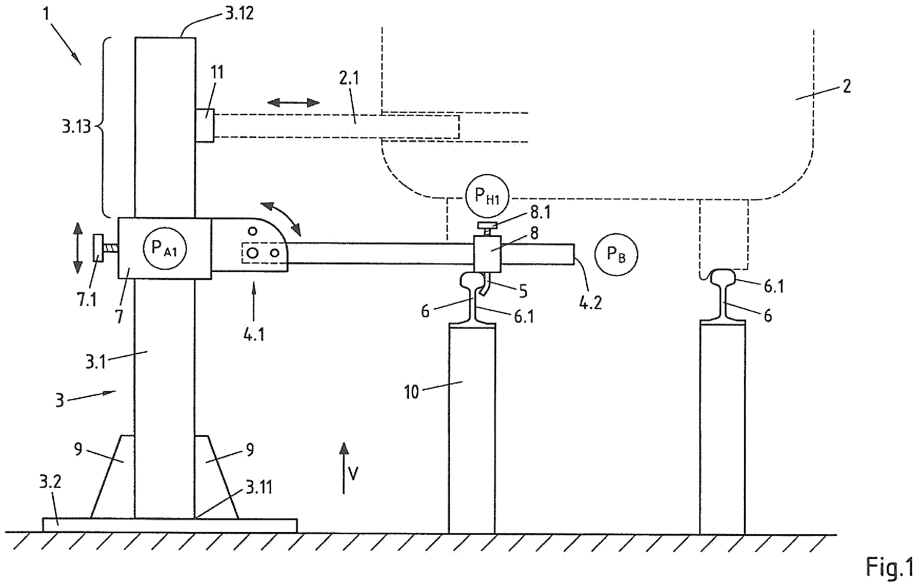

Im Folgenden wird die Erfindung am Beispiel eines Schiebetrittes eines Schienenfahrzeugs beschrieben. In Fig. 1 ist in der linken Bildhälfte eine Vorrichtung 1 zur Klemmkraftmessung dargestellt, die einen Ständer 3, einen Ausleger 4 und einen Haken 5 aufweist.

Der Ständer 3 weist wiederum einen sich von einem unteren Ende 3.11 zu einem oberen Ende 3.12 in einer vertikalen Richtung V (entgegen der Schwerkraftrichtung) erstreckenden Balken 3.1 auf.

Der Ausleger 4 ist an dem Balken befestigt und erstreckt sich von einem ersten Ende 4.1, mit dem er am Balken befestigt ist, zu einem zweiten Ende 4.2. Die Befestigung des Auslegers 4 am Balken 3.1 erfolgt über ein Element 7 in Form eines Rahmens, welcher um den Balken 3.1 herumgelegt ist und am Balken 3.1 verschiebbar, insbesondere höhenverstellbar, ist. Das Element 7 und damit der Ausleger 4 kann in einer ersten Auslegerpositon P_{A1} (Fig. 1) und einer zweiten Auslegerposition P_{A2} mittels einer Schraube 7.1 fixiert werden. Es ist auch eine Fixierung in Zwischenpositionen möglich.

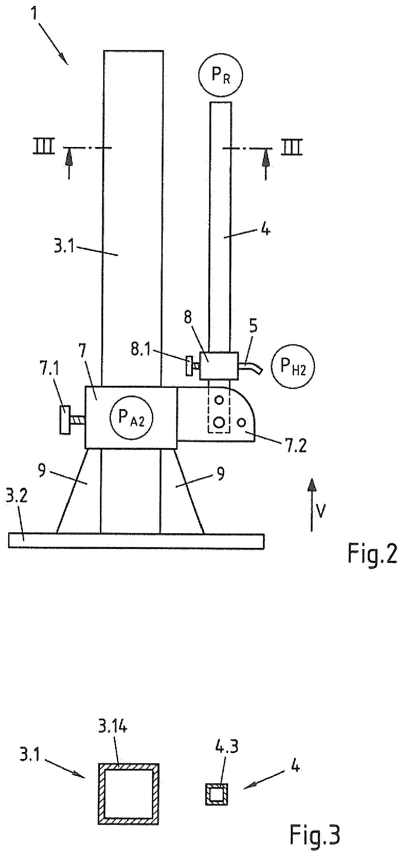

Der Haken 5 ist beabstandet zu dem Balken 3.1 am Ausleger 4 befestigt. Die Befestigung erfolgt über ein Element 8 in Form eines um den Ausleger 4 herum angeordneten Rahmens, der verstellbar bzw. verschiebbar am Ausleger 4 gelagert ist. Der Haken 5 ist mit diesem Element 8 im vorliegenden Ausführungsbeispiel einstückig ausgeführt. Das Element 8 kann über eine Schraube 8.1 in einer ersten Hakenposition P_{H1} (Fig. 1) und in einer zweiten Hakenposition P_{H2} (Fig. 2) sowie Zwischenpositionen fixiert werden.

Schließlich weist der Ständer 3 noch einen plattenförmigen Fuß 3.2 auf, wobei zu Verstärkungszwecken Winkeleisen 9 zwischen Balken 3.1 und Fuß 3.2 angeordnet sind.

Der Ständer 3.1, die Winkeleisen 9 und der Fuß 3.2 bestehen aus Metall und sind miteinander verschweißt. Auch die übrigen Teile bestehen hier aus Metall.

In der rechten Bildhälfte von Fig. 1 ist ein Schienenfahrzeug 2 symbolisch durch eine gestrichelte Linie dargestellt, welches einen Schiebetritt 2.1 aufweist, der ebenfalls symbolisch in einer ausgefahrenen Position durch eine gestrichelte Linie dargestellt ist. Das Schienenfahrzeug 2 ist auf Schienen 6 angeordnet, wobei aus Gründen der Übersichtlichkeit nur eines der auf den Schienen 6 aufstehenden Räder des Schienenfahrzeugs dargestellt ist.

Die Schienen 6 befinden sich im vorliegenden Ausführungsbeispiel auf einem Gestell 10; man spricht in diesem Fall auch von aufgeständerten Gleisen. Solche aufgeständerten Gleise werden bei der Wartung und Herstellung von Schienenfahrzeugen verwendet, um die Arbeiten im unteren Bereich des Schienenfahrzeugs 2 zu vereinfachen. Grundsätzlich ist die erfindungsgemäße Vorrichtung 1 und das erfindungsgemäße Verfahren aber auch bei nichtaufgeständerten Gleisen anwendbar.

Wie in Fig. 1 dargestellt, verläuft der Ausleger 4 in einer hier dargestellten Betriebsposition P_{B} in einem rechten Winkel zu einem sich vertikal erstreckenden Balken 3.1. Genauer gesagt verläuft der Ausleger 4 in einer horizontalen Ebene. In der dargestellten Betriebsposition P_{B} erstreckt sich ein Abschnitt 3.13 des Balkens 3.1 in vertikaler Richtung V oberhalb des ersten Endes 4.1 des Auslegers 4. Dieser Abschnitt 3.13 dient als Hindernis für die Klemmkraftmessung. Das heißt, eine Messeinrichtung 11 läßt sich zur Klemmkraftmessung zwischen dem oberen Abschnitt 3.13 des Balkens 3.1 und dem ausgefahrenen Schiebetritt 2.1 anordnen, wie in Fig. 1 dargestellt ist.

Damit bei dieser Klemmkraftmessung der Balken 3.1 nicht durch den ausfahrenden Schiebetritt 2.1 vom Schienenfahrzeug 2 weggedrückt wird, ist der Balken 3.1 über den Ausleger 4 und den Haken 5 an den Schienen 6 verankert. Dabei umgreift der hier leicht in Richtung des Balkens 3.1 gebogene Haken 5 den oberen Teil der Schiene 6, das heißt den sogenannten Schienenkopf. Der Haken 5 liegt dabei an der von der Vorrichtung 1 abgewandten Seite 6.1 der jeweiligen Schiene 6 an. In diesem Fall wirkt der Haken 5 mit der nächstliegenden (hier linken) Schiene zusammen, obwohl es auch denkbar ist, dass der Haken 5 mit der weiter entfernten (rechten) Schiene in entsprechender Weise zusammenwirkt. Grundsätzlich wäre auch die Verwendung zweier Haken 5 denkbar, wobei in entsprechender Weise einer der Haken mit der einen Schiene 6 und der andere der Haken mit der anderen Schiene 6 zusammenwirkt.

Nachdem die Klemmkraftmessung beendet ist, wird der Schiebetritt 2.1 wieder eingefahren und die Messeinrichtung 11 entfernt. Nun kann die Vorrichtung 1 wie in Fig. 2 dargestellt angeordnet werden. Dazu wird der Ausleger 4 von der Betriebsposition P_{B} in eine Ruheposition P_{R} geschwenkt, in der der Ausleger 4 parallel zum Balken 3.1 verläuft. Um die Schwenkbewegung zu ermöglichen, weist das Element 7 eine Gelenkverbindung 7.2 auf. Die Gelenkverbindung 7.2 ermöglicht auch ein Fixieren des Auslegers 4 in der jeweiligen Position, das heißt in der Betriebsposition P_{B} (Fig. 1) und der Ruheposition P_{R} (Fig. 2).

Wie ebenfalls in Fig. 2 zu erkennen ist, wurde auch das Element 7 verschoben, nämlich von der ersten Auslegerposition P_{A1} in die zweite Auslegerposition P_{A2}, die sich im unteren Abschnitt des Balkens 3.1 befindet, hier unmittelbar über den Winkeleisen 9.

Schließlich wurde auch das Element 8 von der ersten Hakenposition P_{H1} in die zweite Hakenposition P_{H2} verschoben, die sich unmittelbar benachbart zu der Gelenkverbindung 7.2 befindet.

Fig. 3 zeigt schließlich eine Schnittansicht der Vorrichtung 1 entlang der Schnittlinie AA in Fig. 2. Anhand der Schnittansicht wird deutlich, dass bei dem dargestellten Ausführungsbeispiel der Balken 3.1 von einem Hohlprofil 3.14 und der Ausleger 4 von einem Hohlprofil 4.3 gebildet wird. Beide Hohlprofile 3.14 und 4.3 weisen einen rechteckigen Außenquerschnitt auf.

## Patentansprüche

1. Vorrichtung (1) zur Klemmkraftmessung an einer ausfahrbaren Trittstufe (2.1) eines Fahrzeugs (2), insbesondere eines Schienenfahrzeugs (2),
- mit einer Messeinrichtung (11),
**dadurch gekennzeichnet, dass** die Vorrichtung (1) ferner aufweist:
- einen Ständer (3), der einen sich von einem unteren Ende (3.11) zu einem oberen Ende (3.12) im Wesentlichen in einer vertikalen Richtung (V) erstreckenden Balken (3.1) aufweist,
- einen Ausleger (4), der sich von einem ersten Ende (4.1), mit dem er an dem Balken (3.1) befestigt ist, zu einem zweiten Ende (4.2) erstreckt, und
- einen Haken (5), der an dem Ausleger (4) beabstandet zu dem Balken (3.1) befestigt ist,
wobei der Ausleger (4) in einer Betriebsposition (P_{B}) winkelig zum Balken (3.1) verläuft, wobei sich in der Betriebsposition (P_{B}) ein Abschnitt (3.13) des Balkens (3.1) in vertikaler Richtung (V) oberhalb des ersten Endes (4.1) des Auslegers (4) erstreckt, wobei die Messeinrichtung (11) in vertikaler Richtung (V) oberhalb des ersten Endes (4.1) des Auslegers (4) positioniert ist, und wobei, wenn der Haken (5) mit einer der Schienen (6), auf denen das Fahrzeug (2) mit der ausfahrbaren Trittstufe (2.1) angeordnet ist, zusammenwirkt, der Ausleger (4) den Balken (3.1) in horizontaler Richtung und quer zur Verlaufsrichtung der Schienen (6) fixiert.

2. Vorrichtung (1) nach Anspruch 1, **dadurch gekennzeichnet, dass** der Haken (5) in der Betriebsposition in vertikaler Richtung (V) nach unten weist.

3. Vorrichtung (1) nach Anspruch 1 oder 2, **dadurch gekennzeichnet, dass** der Haken (5) gebogen ist, insbesondere in Richtung des Balkens (3.1).

4. Vorrichtung (1) nach einem der vorangehenden Ansprüche, **dadurch gekennzeichnet, dass** der Haken (5) am Ausleger (4) zwischen einer ersten Hakenposition (P_{H1}) und einer zweiten Hakenposition (P_{H2}) verstellbar ist, wobei der Haken (5) in der ersten Hakenposition (P_{H1}), in der zweiten Hakenposition (P_{H2}) und/oder in mindestens einer Zwischenposition am Ausleger (4) insbesondere fixierbar ist.

5. Vorrichtung (1) nach einem der vorangehenden Ansprüche, **dadurch gekennzeichnet, dass** der Ausleger (4) am Balken (3.1) zwischen einer ersten Auslegerposition (P_{A1}) und einer zweiten Auslegerposition (P_{A2}) verstellbar ist, wobei der Ausleger (4) in der ersten Auslegerposition (P_{A1}), in der zweiten Auslegerposition (P_{A2}) und/oder in mindestens einer Zwischenposition am Balken (3.1) insbesondere fixierbar ist.

6. Vorrichtung (1) nach einem der vorangehenden Ansprüche, **dadurch gekennzeichnet, dass** der Ausleger (4) zwischen der Betriebsposition (P_{B}) und einer Ruheposition (P_{R}) schwenkbar ist, wobei der Ausleger (4) in der Betriebsposition (P_{B}) und/oder in der Ruheposition (P_{R}) insbesondere fixierbar ist.

7. Vorrichtung (1) nach Anspruch 6, **dadurch gekennzeichnet, dass** sich der Ausleger (4) in der Ruheposition (P_{R}) entlang des Balkens (3.1), insbesondere parallel zum Balken (3.1), erstreckt.

8. Vorrichtung (1) nach einem der vorangehenden Ansprüche, **dadurch gekennzeichnet, dass** der Ständer (3) einen insbesondere plattenförmigen Fuß (3.2) aufweist, der mit dem unteren Ende (3.11) des Balkens (3.1), insbesondere unlösbar, verbunden ist.

9. Vorrichtung (1) nach einem der vorangehenden Ansprüche, **dadurch gekennzeichnet, dass** der Balken (3.1) und/oder der Ausleger (4) ein Hohlprofil (3.14,4.3) ist und insbesondere einen rechteckigen Außenquerschnitt aufweist.

10. Vorrichtung (1) nach einem der vorangehenden Ansprüche, **dadurch gekennzeichnet, dass** der Balken (3.1), der Ausleger (4), der Haken (5) und/oder der Fuß (3.2) aus Metall besteht.

11. Verfahren zur Klemmkraftmessung an einer ausfahrbaren Trittstufe (2.1) eines Fahrzeugs (2), insbesondere Schienenfahrzeugs (2), unter Verwendung einer Vorrichtung (1) nach einem der vorangehenden Ansprüche, bei dem die folgenden Schritte durchgeführt werden:
- Bereitstellen des Fahrzeugs (2) auf Schienen (6),
- Aufstellen der Vorrichtung (1) in einer Position, in der der Balken (3.1) innerhalb der horizontalen Verlängerung, insbesondere des Verschiebewegs, der ausfahrbaren Trittstufe (2.1) liegt,
- Positionieren des Auslegers (4) in der Betriebsposition (P_{B}),
- Anlegen des Hakens (5) an der vom Ständer (3) abgewandten Seite (6.1) einer der Schienen (6),
- Positionieren der Messeinrichtung (11) in vertikaler Richtung (V) oberhalb des ersten Endes (4.1) des Auslegers (4),
- Ausfahren der Trittstufe (2.1), so dass die Messeinrichtung (7) einer Klemmkraft ausgesetzt wird, und
- Erfassen der Klemmkraft zwischen ausgefahrener Trittstufe (2.1) und Balken (3.1) mittels der Messeinrichtung (11).

12. Verfahren nach Anspruch 11, **dadurch gekennzeichnet, dass** bei dem Schritt des Positionierens des Auslegers (4) in der Betriebsposition (P_{B}) der Ausleger (4) am Balken (3.1) in einem Bereich zwischen der ersten Auslegerposition (P_{A1}) und der zweiten Auslegerposition (P_{A2}) verstellt und anschließend am Balken (3.1) insbesondere fixiert wird.

13. Verfahren nach Anspruch 11 oder 12, **dadurch gekennzeichnet, dass** bei dem Schritt des Positionierens des Auslegers (4) in der Betriebsposition (P_{B}) der Ausleger (4) von der Ruheposition (P_{R}) in die Betriebsposition (P_{B}) geschwenkt und anschließend insbesondere fixiert wird.

14. Verfahren nach einem der Ansprüche 11 bis 13, **dadurch gekennzeichnet, dass** bei dem Schritt des Anlegens des Hakens (5) der Haken (5) am Ausleger (4) in einem Bereich zwischen der ersten Hakenposition (P_{H1}) und der zweiten Hakenposition (P_{H2}) verstellt und anschließend am Ausleger (4) insbesondere fixiert wird.

## Claims

1. A device (1) for clamping force measurement on an extensible step (2.1) of a vehicle (2), in particular a rail vehicle (2),
- with a measuring device (11)
**characterised in that** the device (1) further includes:
- a stand (3) which has a bar (3.1) extending substantially in a vertical direction (V) from a bottom end (3.11) to a top end (3.12),
- a boom (4) extending from a first end (4.1), by which it is attached to the bar (3.1), to a second end (4.2), and
- a hook (5) attached to the boom (4) at a distance from the bar (3.1),
wherein in an operating position (P_{B}) the boom (4) is aligned at an angle to the bar (3.1), wherein in the operating position (P_{B}) a section (3.13) of the bar (3.1) extends above the first end (4.1) of the boom (4) in the vertical direction (V), wherein the measuring device (11) is positioned above the first end (4.1) of the boom (4) in the vertical direction (V), and wherein when the hook (5) interacts with one of the rails (6) on which the vehicle (2) with the extensible step (2.1) is arranged, the boom (4) fixes the bar (3.1) in the horizontal direction and transversely to the direction of alignment of the rails (6).

2. The device (1) according to claim 1, **characterized in that** the hook (5) faces downward in the vertical direction (V) in the operating position.

3. The device (1) according to claim 1 or 2, **characterized in that** the hook (5) is bent, particularly in the direction of the bar (3.1).

4. The device (1) according to any one of the preceding claims, **characterized in that** the hook (5) is displaceable on the boom (4) between a first hook position (P_{H1}) and a second hook position (P_{H2}), wherein the hook (5) can be particularly fixed in the first hook position (P_{H1}), in the second hook position (P_{H2}) and/or in at least one intermediate position on the boom (4).

5. The device (1) according to any one of the preceding claims, **characterized in that** the boom (4) is displaceable on the bar (3.1) between a first boom position (P_{A1}) and a second boom position (P_{A2}), wherein the boom (4) can be particularly fixed in the first boom position (P_{A1}), in the second boom position (P_{A2}) and/or in at least one intermediate position on the bar (3.1).

6. The device (1) according to any one of the preceding claims, **characterized in that** the boom (4) can be pivoted between the operating position (P_{B}) and a rest position (P_{R}), wherein the boom (4) can be particularly fixed in the operating position (P_{B}) and/or in the rest position (P_{R}).

7. The device (1) according to claim 6, **characterized in that** in the rest position (P_{R}) the boom (4) extends along the bar (3.1), in particular parallel to the bar (3.1).

8. The device (1) according to any one of the preceding claims, **characterized in that** the stand (3) has a particularly plate-shaped foot (3.2) which is particularly inseparably connected to the bottom end (3.11) of the bar (3.1).

9. The device (1) according to any one of the preceding claims, **characterized in that** the bar (3.1) and/or the boom (4) is/are a hollow profile (3.14, 4.3), and in particular has a rectangular outer cross section.

10. The device (1) according to any one of the preceding claims, **characterized in that** the bar (3.1), the boom (4), the hook (5) and/or the foot (3.2) is/are made of metal.

11. A method for clamping force measurement on an extensible step (2.1) of a vehicle (2), in particular a rail vehicle (2), using a device (1) according to any one of the preceding claims, in which the following steps are performed:
- providing the vehicle (2) on rails (6),
- setting up the device (1) in a position in which the bar (3.1) lies inside the horizontal extension, particularly the displacement path, of the extensible step (2.1),
- positioning the boom (4) in the operating position (P_{B}),
- placing the hook (5) on the side (6.1) of one of the rails (6) facing away from the stand (3),
- positioning the measuring device (11) in the vertical direction (V) above the first end (4.1) of the boom (4),
- extending the step (2.1), so that the measuring device (7) is subjected to a clamping force, and
- detecting the clamping force between the extended step (2.1) and the bar (3.1) by means of the measuring device (11).

12. The method according to claim 11, **characterized in that** in the step of positioning the boom (4) in the operating position (P_{B}) the boom (4) is shifted on the bar (3.1) in an area between the first boom position (P_{A1}) and the second boom position (P_{A2}) and then in particular fixed to the bar (3.1).

13. The method according to claim 11 or 12, **characterized in that** in the step of positioning the boom (4) in the operating position (P_{B}) the boom (4) is pivoted from the rest position (P_{R}) into the operating position (P_{B}) and then in particular fixed.

14. The method according to any one of claims 11 to 13, **characterized in that** in the step of placing the hook (5) the hook (5) is shifted on the boom (4) in a region between the first hook position (P_{H1}) and the second hook position (P_{H2}) and then particular fixed to the boom (4).

## Revendications

1. Dispositif (1) de mesure de la force de serrage sur une marche amovible (2.1) d'un véhicule (2), notamment d'un véhicule sur rail (2),
- avec un système de mesure (11),
**caractérisé en ce que** le dispositif (1) comprend en plus :
- un montant (3), qui comporte une traverse (3.1) s'étendant d'une extrémité inférieure (3.11) à une extrémité supérieure (3.12) pour l'essentiel dans une direction verticale (V),
- un bras (4), qui s'étend d'une première extrémité (4.1), avec laquelle il est fixé à la traverse (3.1), à une deuxième extrémité (4.2), et
- un crochet (5), qui est fixé à la traverse (3.1) à distance du bras (4),
le bras (4) passant dans une position de fonctionnement (P_{B}) de façon angulaire par rapport à la traverse (3.1), une section (3.13) de la traverse (3.1) s'étendant dans la position de fonctionnement (P_{B}) dans la position verticale (V) au-dessus de la première extrémité (4.1) du bras (4), le dispositif de mesure (11) étant positionné dans la direction verticale (V) au-dessus de la première extrémité (4.1) du bras (4), et lorsque le bras (5) coopère avec un des rails (6) sur lesquels le véhicule (2) avec la marche amovible (2.1) est disposé, le bras (4) fixe la traverse (3.1) dans la direction horizontale et transversalement à la direction de passage des rails (6).

2. Dispositif (1) selon la revendication 1, **caractérisé en ce que** dans la position de fonctionnement le crochet (5) est dirigé vers le bas dans la direction verticale (V).

3. Dispositif (1) selon la revendication 1 ou 2, **caractérisé en ce que** le crochet (5) est courbé, notamment en direction de la traverse (3.1).

4. Dispositif (1) selon l'une quelconque des revendications précédentes, **caractérisé en ce que** le crochet (5) peut être réglé sur le bras (4) entre une première position de crochet (P_{H1}) et une deuxième position de crochet (P_{H2}), le crochet (5) pouvant être notamment fixé sur le bras (4) dans la première position de crochet (P_{H1}), dans la deuxième position de crochet (P_{H2}) et/ou dans au moins une position intermédiaire.

5. Dispositif (1) selon l'une quelconque des revendications précédentes, **caractérisé en ce que** le bras (4) peut être réglé sur la traverse (3.1) entre une première position de bras (P_{A1}) et une deuxième position de bras (P_{A2}), le bras (4) pouvant être notamment fixé sur la traverse (3.1) dans la première position de bras (P_{A1}), dans la deuxième position de bras (P_{A2}) et/ou au moins une position intermédiaire.

6. Dispositif (1) selon l'une quelconque des revendications précédentes, **caractérisé en ce que** le bras (4) peut être pivoté entre la position de fonctionnement (P_{B}) et une position de repos (P_{R}), le bras (4) pouvant être notamment fixé dans la position de fonctionnement (P_{B}) et/ou dans la position de repos (P_{R}).

7. Dispositif (1) selon la revendication 6, **caractérisé en ce que** le bras (4) s'étend dans la position de repos (P_{R}) le long de la traverse (3.1), notamment parallèlement à la traverse (3.1).

8. Dispositif (1) selon l'une quelconque des revendications précédentes, **caractérisé en ce que** le montant (3) comporte un pied (3.2) notamment en forme de plaque, qui est relié, notamment de manière inamovible, à l'extrémité inférieure (3.11) de la traverse (3.1).

9. Dispositif (1) selon l'une quelconque des revendications précédentes, **caractérisé en ce que** la traverse (3.1) et/ou le bras (4) est un profilé creux (3.14, 4.3) et comporte notamment une section extérieure rectangulaire.

10. Dispositif (1) selon l'une quelconque des revendications précédentes, **caractérisé en ce que** la traverse (3.1), le bras (4), le crochet (5) et/ou le pied (3.2) sont en métal.

11. Procédé de mesure de la force de serrage sur une marche amovible (2.1) d'un véhicule (2), notamment d'un véhicule sur rail (2), en utilisant un dispositif (1) selon l'une quelconque des revendications précédentes, pour lequel les étapes suivantes sont exécutées :
- préparation du véhicule (2) sur rails (6),
- mise en place du dispositif (1) dans une position, dans laquelle la traverse (3.1) se trouve à l'intérieur de la prolongation horizontale, notamment de la course de déplacement, de la marche amovible (2.1),
- positionnement du bras (4) dans la position de fonctionnement (P_{B}),
- pose du crochet (5) sur le côté (6.1) détourné du montant (3) d'un des rails (6),
- positionnement du système de mesure (11) en direction verticale (V) au-dessus de la première extrémité (4.1) du bras (4),
- sortie de la marche (2.1) de sorte que le système de mesure (7) soit exposé à une force de serrage, et
- saisie de la force de serrage entre la marche (2.1) sortie et la traverse (3.1) au moyen du système de mesure (11).

12. Procédé selon la revendication 11, **caractérisé en ce que** lors de l'étape de positionnement du bras (4) dans la position de fonctionnement (P_{B}), le bras (4) est réglé sur la traverse (3.1) dans une plage entre la première position de bras (P_{A1}) et la deuxième position de bras (P_{A2}) et est notamment fixé ensuite sur la traverse (3.1).

13. Procédé selon la revendication 11 ou 12, **caractérisé en ce que** lors de l'étape de positionnement du bras (4) dans la position de fonctionnement (P_{B}), le bras (4) est pivoté de la position de repos (P_{R}) dans la position de fonctionnement (P_{B}) et est notamment ensuite fixé.

14. Procédé selon l'une quelconque des revendications 11 à 13, **caractérisé en ce que** lors de l'étape de la pose du crochet (5), le crochet (5) est réglé sur le bras (4) dans une plage entre la première position de crochet (P_{H1}) et la deuxième position de crochet (P_{H2}) et est notamment fixé ensuite sur le bras (4).
